# EUROPÄISCHE PATENTSCHRIFT

(11) **EP 1 640 652 B1**
(45) Veröffentlichungstag und Bekanntmachung des Hinweises auf die Patenterteilung: **29.10.2008**
(21) Anmeldenummer: 05020324.9
(22) Anmeldetag: 17.09.2005
(51) Int. Cl.: F16L 59/153, F16L 59/147

(54) **Thermisch isoliertes, flexibles Leitungsrohr und Verfahren zur und Vorrichtung für die Herstellung eines Leitungsrohrs**
thermically insulated flexible pipe, procedure and device to manufacture said pipe
Tuyau souple thermiquement isolé, procédé et outillage de fabrication d'un tel tuyau

(30) Priorität: 25.09.2004 DE 102004046656
(43) Veröffentlichungstag der Anmeldung: 29.03.2006
(73) Patentinhaber: Preh GmbH, 97616 Bad Neustadt a.d. Saale (DE)
(72) Erfinder: Bardroff, Hans, 97618 Hohenroth (DE)
(74) Vertreter: Thul, Hermann

(56) Entgegenhaltungen:
- EP-A- 1 288 558
- DE-A1- 3 307 120
- DE-U1- 29 615 423
- US-A- 3 698 440
- US-A- 3 812 886

## Beschreibung

Die Erfindung betrifft ein thermisch isoliertes, flexibles Leitungsrohr mit einem medienführenden Innenrohr, einer das Innenrohr umgebenden diffusionsdichten Metallfolie, einer die Metallfolie umgebenden Wärmedämmschicht und einem die Wärmedämmschicht umschließenden Kunststoff, sowie ein Verfahren zur Herstellung eines thermisch isolierten und flexiblen Leitungsrohrs und eine Vorrichtung für die Herstellung eines Leitungsrohrs.

Derartige flexible, endlose und selbstkompensierende Rohrleitungssysteme aus Kunststoff mit einer Wärmedämmung sind für Nah- und Fernwärmenetze im Niedertemperaturbereich, in Kälteanlagen, Trinkwasserleitungen, Abwassersystemen, Industrie- und Schwimmbadtechnik konzipiert. Diese Rohrleitungssysteme sind flexibel, so dass sie in Längen von bis zu 1000 m auf Kabeltrommeln transportiert und ähnlich wie elektrische Kabel in einem Stück ohne Verbindungsstücke verlegt werden können. Die Wanddicke und die technologischen Werte der Wärmedämmschicht variieren dabei in Abhängigkeit der optimalen Verlege- und Isoliereigenschaften.

Aus der deutschen Offenlegungsschrift 196 29 678 A1 ist ein Verfahren zur Herstellung eines wärmeisolierten Leitungsrohres bekannt. Hierbei wird das Innenrohr mit Abstand von einer zu einem Schlauch geformten Kunststofffolie umhüllt, in den Raum zwischen Innenraum und Kunststofffolie wird ein aufschäumbarer Kunststoff eingebracht, danach werden Innenrohr und Schlauch in ein aus mitlaufenden Formhälften bestehendes Formwerkzeug eingefahren, wobei der Schlauch durch den aufschäumenden Kunststoff in das Wellprofil der geschlossenen Formhälften eingedrückt wird. Auf die gewellte Oberfläche des Schlauches wird ein weiteres Außenrohr extrudiert. Mit derartigen Wellenprofilen wird die Handhabung bei der Verlegung der Leitungsrohre erleichtert. Da derartige Leitungsrohre vollständig aus Kunststoff bestehen, sind derartige Rohre gegen Diffusion der in den Leitungsrohren geführten Medien anfällig.

Um diffusionsdichte Leitungsrohre herzustellen, ist aus der DE 33 07 120 A1 ein Verfahren zur Herstellung und ein Fernwärmeleitungsrohr bekannt, dessen Innenrohr mit einer Metallfolie umwickelt ist. Die Metallfolie verhindert, dass das durch das Innenrohr geführte Medium durch die Rohrwandung hindurch in die Wärmedämmschicht hinein diffundiert, was unter Umständen zu einer Zerstörung des Wärmedämmmittels führen kann. Um eine sichere Diffusionssperre herzustellen, wird hierbei die Metallfolie in Längsrichtung und an den Enden überlappend um das Rohr herumgewickelt. Dabei wird die Metallfolie vollständig auf das Innenrohr aufgeklebt. Hieraus ergibt sich ebenfalls eine Klebeverbindung in der Überlappungsnaht.

Ein sehr viel einfacher aufgebautes wärmegedämmtes Leitungsrohr ist in der DE 29 13 876 A1 offenbart. Das wärmegedämmte Leitungsrohr mit einem zur Medienführung vorgesehen Innenrohr aus Glasfaser verstärktem Kunststoff, das mit Abstand von einem Mantelrohr umgeben ist und bei dem der Hohlringraum mit einer Wärmedämmung ausgefüllt ist, besitzt auf der Außenseite des glasfaserverstärkten Kunststoffinnenrohrs eine diffusionsdichte Schicht, die zum Beispiel aus einer Aluminiumfolie gebildet werden kann. Ein derartig aufgebautes Leitungsrohr besitzt aber den Nachteil, dass die Metallfolie fest mit dem Innenrohr verbunden ist und das es aufgrund der unterschiedlichen Dehnungen der Werkstoffe zu Problemen bei der Verformung derartiger Leitungsrohre kommen kann. Eine uneingeschränkte Handhabbarkeit derartiger Leitungsrohre ist somit nicht gegeben.

Ein wärmeisoliertes, flexibles Leitungsrohr mit den Merkmalen des Oberbegriffs des Anspruchs 1 ist aus EP-A-1 288 558 bekannt.

Aufgabe der Erfindung ist es, ein thermisch isoliertes, flexibles Leitungsrohr zu entwickeln, das kostengünstig zu fertigen ist, einen konstruktiv einfachen Aufbau aufweist und das eine hohe Flexibilität in Bezug auf die Handhabung und Montage aufweist. In verfahrenstechnischer Hinsicht liegt die Aufgabe der Erfindung darin, ein Verfahren herzustellen, mittels der wirtschaftlich günstig und mit hohen Produktionsgeschwindigkeiten und somit geringen Herstellungskosten ein Leitungsrohr hergestellt werden kann. In Bezug auf die Vorrichtung für die Herstellung eines Leitungsrohr besteht die Aufgabe darin, dass mit minimalen konstruktiven Mitteln auch höchste Produktionsgeschwindigkeiten erzielt werden können.

Die erfindungsgemäße Aufgabe zur Entwicklung eines Leitungsrohrs mit hoher Flexibilität wird dadurch gelöst, dass zwischen dem Innenrohr und der Metallfolie eine weitere innere wärmedämmende Schicht angeordnet ist. Durch den erfindungsgemäßen Aufbau des thermisch isolierten, flexiblen Leitungsrohrs ist nun die Möglichkeit geschaffen, ein konstruktiv einfach aufgebautes Leitungsrohr bereitzustellen, das im Rahmen der Verbiegbarkeit eines Leitungsrohres höchste Flexibilität aufweist. Durch die Einbringung einer weiteren Kunststoffschicht zwischen das Innenrohr und die Metalllage, in Form der Metallfolie, ist die Metallfolie nicht mehr im unmittelbaren Kontakt mit dem Innenrohr und somit während des Verlegens des Leitungsrohrs nicht mehr von der Dehnung des Innenrohrs und dessen werkstoffspezifischen Eigenschaften abhängig. Bei einer Verformung des Leitungsrohrs können die Dehnungen der Metallfolie jetzt von der Wärmedämmschicht aufgenommen werden, so dass die Wärmedämmschicht in der Lage ist Stauchungen und Dehnungen elastisch aufzunehmen. Dies ist insbesondere dann sehr leicht möglich, wenn wie üblich mit Poren ver- sehene, schäumende Kunststoffe als Dämmschicht verwendet werden.

Der erfindungsgemäße Vorteil wird in einer Ausgestaltungsvariante gemäß den Unteransprüchen dadurch noch vergrößert, dass die Metallfolie wendelförmig profiliert vorliegt. Hierdurch kann nicht nur die Dehnung der Metallfolie im Bereich der Wärmedämmschicht aufgenommen werden, es besteht darüber hinaus sogar die Möglichkeit, dass in der Wendel zur Verfügung stehende überschüssige Material bei der Dehnung, das heißt beim Verbiegen des Leitungsrohrs zur Verfügung zu stellen.

In verfahrenstechnischer Hinsicht wird die mit der Erfindung gestellte Aufgabe dahingehend gelöst, dass das Innenrohr unmittelbar nach dem Zuführen und vor dem Umwickeln mit einer Metallfolie mittels einer Ringdüsse mit einer inneren Wärmedämmschicht, insbesondere einem Zweikomponentenschaum auf Polyurethanbasis, umspritzt und dass die Wärmedämmschicht nach dem Umspritzen mit Heißluft beaufschlagt wird.

Durch den Einsatz einer Ringdüse bei der Herstellung des thermisch isolierten, flexiblen Leitungsrohr ist eine wirtschaftlich günstige Herstellbarkeit des Leitungsrohrs ermöglicht. Die Ringdüse ermöglicht es die innere Wärmedämmschicht sehr viel schneller und gleichmäßiger auf das Innenrohr aufzutragen, als dies mit herkömmlichen zum Stand der Technik gehörenden Spritzpistolen möglich ist. Mit dem Einsatz einer erfindungsgemäß ausgestalteten Ringdüse kann die Produktionsgeschwindigkeit wesentlich erhöht werden. In Kombination der gekühlten Ringdüse mit einem Heißluftgebläse ist dabei ein sehr genaues Dosieren und Einstellen der Schichtdicke der Wärmedämmschicht gewährleistet und möglich. Entsprechend den Unteransprüchen findet die Ringdüse auch im Bereich des Aufbringens der die Metallfolie umgebende Wärmedämmschicht ihren Einsatz. Durch den Einsatz zweier vergleichbarer Systeme von Ringdüsen ist eine kontinuierliche mit hoher Produktionsgeschwindigkeit fertigende Anlage realisierbar.

Die erfindungsgemäße Lösung der Aufgabe in Bezug auf die Vorrichtung wird dahingehend gelöst, dass die Vorrichtung aus einer im Mittelpunkt mit einer Öffnung versehenen, angetriebenen, metallischen und kreisförmigen Platte auf der diametral und parallel zur Platte je eine Riemenscheibe befestigt ist und einen Riemen der über die Riemenscheibe geführt ist, wobei der Riemen ein durch die Öffnung geführtes Leitungsrohr mindestens einmal umschlingt besteht. Durch diesen konstruktiv einfachen Aufbau einer Vorrichtung zum Profilieren können höchste Produktionsgeschwindigkeiten beim Vorschub des Leitungsrohrs durch eine Fertigungsanlage realisiert werden. Wird der Riemen über ein mit einer Wärmedämmschicht und einer Metallfolie versehenen Leitungsrohr herumgewickelt, so verläuft der Riemen wendelförmig um das Leitungsrohr. Wird nun die Platte angetrieben und um das Leitungsrohr herumgedreht, wobei sich das Leitungsrohr durch die Öffnung hindurch bewegt, so bewegt sich der Riemen wendelförmig in Form einer Steigung eines Gewindes über die Metallfolie hinweg und erzeugt ein wendelförmiges Profil auf der Metallfolie. Ist nun die Fertigungsanlage zur Herstellung des Leitungsrohrs so eingestellt, das die Wärmedämmschicht noch nicht voll ausgehärtet ist, so drückt der Riemen die Metallfolie in die Wärmedämmschicht hinein.

Nachfolgend wird die Erfindung anhand eines Ausführungsbeispiels des Leitungsrohrs und an Zeichnungen erläutert. Es zeigt
- Figur 1: den Schnitt durch ein erfindungsgemäß ausgebildetes thermisch isoliertes, flexibles Leitungsrohr,
- Figur 2: die Seitenansicht auf eine Fertigungsanlage zur Herstellung eines erfindungsgemäßen Leitungsrohrs,
- Figur 3: den Schnitt durch eine erfindungsgemäße Ringdüse gemäß dem Pfeil III aus Figur 2 und
- Figur 4: eine Draufsicht auf die Vorrichtung zum Profilieren der Metallfolie gemäß dem Pfeil IV aus Figur 2.

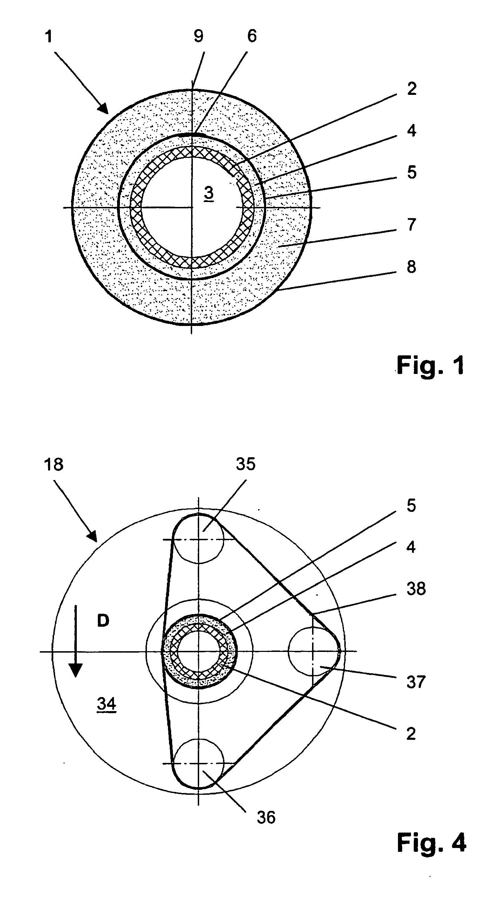

In der Figur 1 ist ein Querschnitt durch ein erfindungsgemäß ausgebildetes thermisch isoliertes, flexibles Leitungsrohr 1 dargestellt. Das Leitungsrohr 1 weist einen im Wesentlichen symmetrischen Aufbau auf. Durch das Innenrohr 2 wird das Medium 3 geführt. Um das Innenrohr 2 herum ist eine erste innere Wärmedämmschicht 4 angeordnet. Um die innere Wärmedämmschicht 4 herum ist die diffusionshemmende Metallfolie 5 angeordnet. In einem Bereich 6 überlappt die Metallfolie 5 und ist miteinander verbunden. Die Verbindung wird vorzugsweise mittels Kleben hergestellt, es ist aber auch vorstellbar andere Fügeverfahren einzusetzen. Um die Metallfolie 5 herum ist eine weitere, äußere Wärmedämmschicht 7 angeordnet. Die Wärmedämmschicht 7 ist abschließend mit einer Kunststofffolie 8 umwickelt.

Die Kunststofffolie 8 hält selbstständig auf dem kurz zuvor auf die Metallfolie 5 aufgebrachten Zweikomponenten Kunststoff 7, der die äußere Wärmedämmschicht 7 bildet. Die Kunststofffolienbahn 8 überlappt ebenfalls geringfügig, wobei der Überlappungsbereich 9 der Kunststofffolie 8 nicht unmittelbar oberhalb der Überlappung 6 der Metallfolie 5 angeordnet sein muß. Die innere 4 wie auch die äußere 7 Wärmedämmschicht sind bevorzugt aus einem Zweikomponentenschaum auf Polyurethanbasis hergestellt. Die Metallfolie 5 ist bevorzugt eine Aluminiumfolie mit einer Dicke von ungefähr 30 µm, wobei hier je nach Anwendungsfall und verwendetem Medium 3 auch unterschiedliche Dicken an Aluminiumfolie 5 verwendet werden können. Die das Leitungsrohr 1 nach außen abschließende Kunststofffolie 8 ist bevorzugt eine Polyesterfolie mit einer Dicke von ca. 90 µm. Auch hier kann je nach Anwendungsfall eine in der Dicke abweichende Folie Verwendung finden. Je nach Anwendungsfall kann das Innenrohr 2 einen Innendurchmesser von ca. 20 bis etwa 200 mm aufweisen. Durch den erfindungsgemäßen Aufbau der Rohrleitung 1 ist nun eine hohe Flexibilität mit größtmöglicher Sicherheit vor einer Beschädigung der Metallfolie 5 beim Verbiegen des Leitungsrohrs 1 gegeben. Wird das Leitungsrohr 1 verbogen so dehnt sich das Innenrohr 2 in einem anderen Maße als die Aluminiumfolie 5. Da die Metallfolie 5 aber eine geringere Dehnbarkeit besitzt als das Innenrohr 2, würde die Metallfolie 5 unzulässig gedehnt oder gar zerrissen, wodurch die Diffusionsdichtigkeit verringert würde. Durch den erfindungsgemäßen Aufbau hat die Metallfolie 5 aber nun die Möglichkeit sich im Bereich zwischen der inneren 4 und äußeren 7 Wärmedämmung zu bewegen. Insbesondere der mit Poren versehene Wärmedämmkunststoff bietet dabei ein elastisches Polster.

Besonders vorteilhaft ist es, die Metallfolie 5 wendelförmig zu profilieren. Durch die Profilierung der Metallfolie 5 besitzt die Metallfolie in einem darüber hinausgehenden Masse die Möglichkeit sich zu strecken, ohne die Metallfolie 5 elastisch oder gar plastisch zu verformen, wenn das Leitungsrohr 1 während der Verlegung verbogen wird.

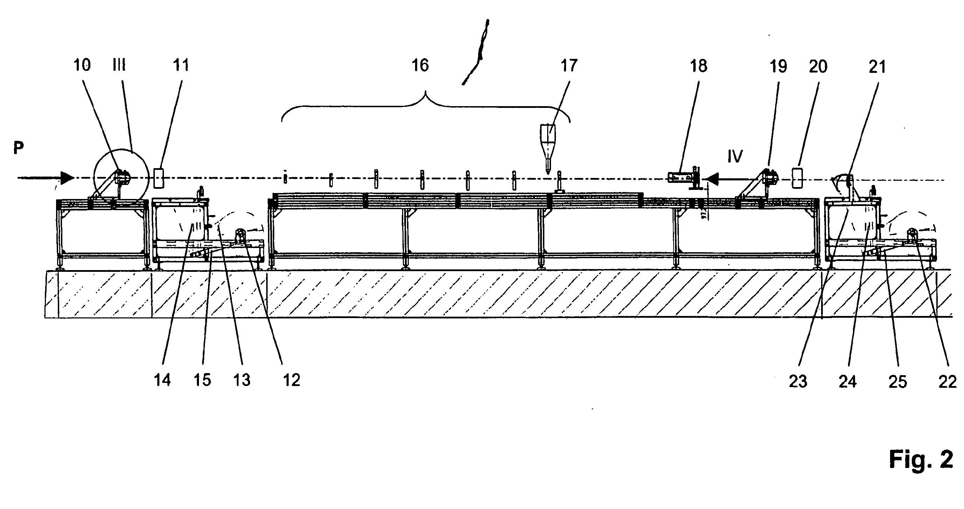

In der Figur 2 ist ein prinzipieller Aufbau einer Anlage zum Herstellen eines erfindungsgemäßen Leitungsrohrs 1 in einer Seitenansicht dargestellt. Die Herstellrichtung verläuft in Figur 2 in Richtung des Pfeils P von links nach rechts. Das Leitungsrohr 1 wird von einer nicht darstellten Vorratstrommel abgewickelt und über ein ebenfalls nicht dargestelltes Führungssystem einer ersten Ringdüse 10 zugeführt. Die Fertigungsanlage zur Herstellung des Leitungsrohrs 1 besteht weiterhin im Wesentlichen aus einem ersten Heißluftgebläse 11, einer Aufnahme 12 für die Metallfolie 13 mit einem entsprechenden Folienspeicher 14 in Form einer Pendelschwinge 15, einem mit Bürsten versehenen Führungs- und Formbereich 16 für die Metallfolie 13, einer Verbindungseinheit 17, die in diesem Ausführungsbeispiel aus einer Klebemittelauftragepistole 17 besteht, einer Vorrichtung zum Profilieren 18, einer zweiten Ringdüse 19, einem weiteren Heißluftgebläse 20, einer Formschulter 21 und einer weiteren Aufnahme 22 für die Kunststofffolienbahn 23, die ebenfalls über ein Folienspeichersystem 24 mit einer Pendelschwinge 25 der Formschulter 21 zugeführt wird.

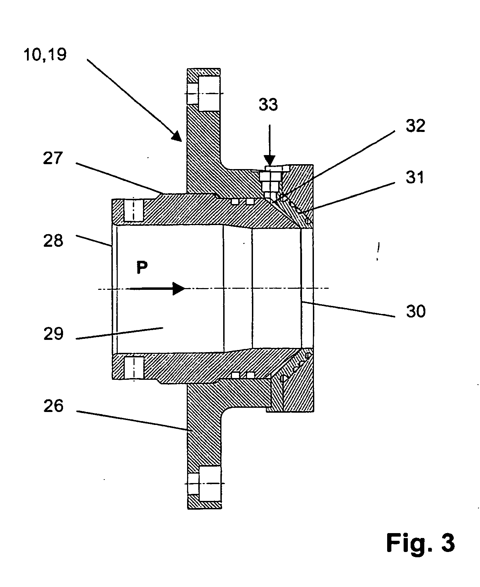

Prinzipiell erfolgen in dem dargestellten Anlagenaufbau folgende Verfahrensschritte hintereinander. Das Innenrohr 2 wird in Richtung des Pfeils P der ersten Ringdüse 10 zugeführt. Dabei schiebt sich das Innenrohr 2 mittig durch die Ringdüse 10. In der Ringdüse 10 wird ein Zweikomponentengemisch aus einem aufschäumbaren Kunststoff ringförmig auf das Innenrohr 2 aufgetragen. Eine detaillierte Ansicht gemäß der Detailansicht III ist in Figur 3 dargestellt und gibt den Aufbau der grundsätzlich identisch aufgebauten Ringdüse 10, 19 wieder. Die Ringdüse besteht dabei im Wesentlichen aus einem Montageflansch 26 in dem ein Drehteil 27 gehalten ist, das gleich mehrere Funktionen ausführt. Das Innenrohr wird in Richtung des Pfeils P in das Drehteil 27 eingeführt. Am Einlauf 28 ist das Drehteil mit einem Radius versehen, damit das Innenrohr 2 leichter eingeführt werden kann. Zur weiteren Fixierung läuft die Bohrung 29 im Inneren des Drehteils 27 konisch zusammen, so dass das Innenrohr sehr genau dem Ringspalt 30 der Ringdüse 10, 19 zugeführt wird. Im Bereich des Ringspalts 30 bildet das Drehteil 27 gemeinsam mit dem Montageflansch 26 und der Kühlmittelführung 31 einen Hohlraum 32, der zum Verteilen des zugeführten Kunststoffgemisches um den Ringspalt 30 herum dient. Das Kunststoffgemisch wird über den Zulauf 33 dem ringförmigen Hohlraum 32 zugeführt. Hierbei wird bevorzugt ein Zulauf 33 eingesetzt, wobei je nach verwendetem Kunststoffgemisch und Geometrie des zu fertigenden Leitungsrohres 1 auch mehrere Zuläufe 33 an der Ringdüse 10, 19 vorhanden sein können. Um die Viskosität des Kunststoffgemisches und das Auftragen auf das Innenrohr 2 optimal einstellen zu können, ist die Ringdüse 10, 19 über Kühlmittelführungen 31 temperierbar, wobei vorzugsweise ein Kühlen der Ringdüse 10, 19, insbesondere des Speicherhohlraums 32 erfolgt. Durch den erfindungsgemäßen Einsatz einer Ringdüse 10, 19 ist der Vorteil geschaffen, dass das Kunststoffgemisch sehr gleichmäßig selbst bei höchsten Produktionsgeschwindigkeiten aufgetragen wird. Die Produktionsgeschwindigkeiten liegen dabei etwa zwischen 10 m und 15 m pro Minute, wobei hiermit die Vorschubgeschwindigkeit des Innenrohrs in Richtung des Pfeils P durch die Ringdüse 10, 19 gemeint ist.

In der Ringdüse 10, 19 wird ein aufschäumbares Kunststoffgemisch auf das Innenrohr 2 aufgetragen. Damit sich die im folgenden Verfahrensschritt um das innere Wärmedämmmaterial 4 gelegte Metallfolie 13 ohne Lufteinschlüsse sauber an das Kunststoffgemisch angelegt wird, ist erfindungsgemäß vorgeschlagen, hinter der Ringdüse 10 ein Heißluftgebläse 11 anzuordnen. Mittels des Heißluftgebläses 11 werden die sich an der Oberfläche des aufgetragenen Kunststoffgemisches bildenden Luftblasen aufgerissen und somit zerstört und es bildet sich eine glatte Oberfläche an die die Metallfolie 13 nahezu ohne Lufteinschlüsse anlegbar und umwickelbar ist. Die Metallfolie 13 wird hinter dem Heißluftgebläse 11 über das Zuführsystem 12, 14, 15 und verschiedene Zuführrollen dem umschäumten Innenrohr 2 zugeführt. Damit sich die Metallfolie 13, die vorzugsweise eine Aluminiumfolie ist, um die Wärmedämmschicht herumwickelt sind Form- und Führungselemente 16 entlang des Führungsweges des Innenrohrs 2 angeordnet. Zum sauberen Führen und Andrücken der Metallfolie 13 sind die Form und Führungselemente 16 mit Bürsten versehen. Unmittelbar vor dem Zusammenführen der Enden der in Längsrichtung zugeführten Metallfolie 13 wird ein Ende der Metallfolie im Überlappungsbereich 6 mittels einer Klebmittelauftragepistole 17 mit Klebemittel versehen. Unmittelbar vor der Vorrichtung zum Profilieren 18 ist das Innenrohr 2 somit vollständig mit der Metallfolie 13 umwickelt und es ist eine vollständige Diffusionssperre ausgebildet.

Der Vorrichtung zum Profilieren 18 der Metallfolie 5, 13 wird das Innenrohr 2 wiederum mittig zugeführt. Eine entsprechende Draufsicht in Richtung des Pfeils IV auf die Vorrichtung zum Profilieren 18 ist in Figur 4 dargestellt. Auf einer kreisförmigen Platte 34 sind in diesem Ausführungsbeispiel drei drehbar gelagerte Riemenscheiben 35, 36, 37 angeordnet. Um die Riemenscheiben 35, 36, 37 läuft ein Riemen 38 um. Der Riemen 38 kann verschiedene Profile aufweisen. Vorzugsweise wird ein Riemen 38 mit einem kreisförmigen Profil verwendet. Der Riemen 38 läuft über die Riemenscheiben 35, 36 und ist einmal um die Metallfolie 5, 13 des herzustellenden Leitungsrohrs 1 gewickelt. Durch das einmalige Umwickeln der Metallfolie 5, 13 liegt der Riemen 38 in Form einer Steigung auf der Metallfolie 5, 13 auf. Wird nun die Platte 34 in Richtung des Pfeils D bewegt, so bewegt sich der Riemen 38 wendelförmig über die Metallfolie 5, 13. Durch die Vorwärtsbewegung des herzustellenden Leitungsrohrs 1 in Richtung des Pfeils D durch die Vorrichtung zum Profilieren 18 ergibt sich je nach Geschwindigkeit der Platte 34 eine mehr oder weniger große Steigung als Profil in der Metallfolie 5, 13. Wird nun der Abstand zur Ringdüse 10 und die Vorschubgeschwindigkeit des Innenrohrs 2 in der Weise eingestellt, dass das Kunststoffgemisch 4 noch nicht vollständig ausgehärtet ist, so drückt sich die Metallfolie 5, 13 in die Wärmedämmschicht 4 hinein. Die Metallfolie 5, 13 liegt somit optimal an der Wärmedämmschicht 4 an beziehungsweise ist in die Wärmedämmschicht 4 eingedrückt. Das dermaßen erzeugte Wellenprofil an der Oberfläche der Metallfolie 5, 13 dient als Zugabe beim Verbiegen des Leitungsrohrs 1 während der Montage des Leitungsrohr am Bestimmungsort.

Nach dem Profilieren der Metallfolie 5 wird das teilweise fertiggestellte Leitungsrohr 1 einer weiteren Ringdüse 19, mit entsprechend angepaßtem Durchmesser zugeführt. Der Aufbau der Ringdüse 19 entspricht dabei im wesentlichen dem Aufbau der Ringdüse 10, wobei lediglich die Abmaße variieren. Nach dem erneuten Auftragen der Wärmedämmschicht 7 mittels der Ringdüse 19 wird die Wärmedämmschicht 7 ebenfalls mit einem Heißluftgebläse 20 beaufschlagt. Die dermaßen geglätte Oberfläche kann nun mit einer Kunststofffolienbahn 23 umwickelt werden.

Das Umwickeln der Wärmedämmschicht 7 erfolgt mittels einer Formschulter 21 in der die Kunststofffolienbahn 23 von der ebenen Fläche, wie sie auf der Vorratsrolle in der Aufnahme 22 gewickelt ist, dermaßen geführt, dass die Kunststofffolienbahn 23 die Wärmedämmschicht 7 vollständig umschließt. Als Kunststofffollien werden dabei insbesondere Polyesterfolien verwendet. Nach dem Umwickeln mit der Kunststofffolienbahn 23 wird das nun fertiggestellte Leitungsrohr 1 wiederum auf eine nicht dargestellte Vorratstrommel aufgewickelt. Es wird noch einmal ausdrücklich darauf hingewiesen, dass hier lediglich der prinzipielle Aufbau einer Fertigungsanlage zur Herstellung eines Leitungsrohrs 1 wiedergegeben ist, entsprechend zwischen, vor oder hinter den Anlagenkomponenten angeordnete Führungs- oder Formrollen für das Innenrohr oder das Leitungsrohr 1 sind hier nicht dargestellt. Durch das erfindungsgemäße Verfahren zur Herstellung eines thermisch isolierten, flexiblen Leitungsrohrs mit den dargestellten Verfahrensschritten ist es erfindungsgemäß nun möglich äußerst wirtschaftlich und mit höchsten Produktionsgeschwindigkeiten ein erfindungsgemäßes Leitungsrohr 1 herzustellen.

## Patentansprüche

1. Thermisch isoliertes, flexibles Leitungsrohr (1) mit einem medienführenden Innenrohr (2), einer das Innenrohr (2) umgebenden diffusionsdichten Metallfolie (5, 13), die in Längsrichtung um das Leitungsrohr (1) gewickelt und an der Überlappungsstelle (6) verbunden, insbesondere verklebt oder verschweißt, ist einer die Metallfolie (5, 13) umgebenden Wärmedämmschicht (7) und einem die Wärmdämmschicht (7) umschließenden Kunststofffolie (8, 23), wobei zwischen dem Innenrohr (2) und der Metallfolie (5,13) eine weitere innere Wärmedämmschicht (4) angeordnet ist und die innere (4) und die die Metallfolie (5, 13) umgebende, äußere (7) Wärmedämmschicht ein Zweikomponentenschaum, insbesondere ein Zweikomponentenschaum, auf Polyurethanbasis ist, **dadurch gekennzeichnet, dass** die Metallfolie (5, 13) wendelförmig profiliert ist und dass das Innenrohr (2) aus Kunststoff besteht.

2. Thermisch isoliertes, flexibles Leitungsrohr nach Anspruch 1, **dadurch gekennzeichnet, dass** der die äußere Wärmedämmschicht (7) umschließende Kunststoff (8, 23) eine Kunststofffolie (8, 23), insbesondere eine Polyesterfolie mit einer Dicke von ca. 90 µm ist.

3. Thermisch isoliertes, flexibles Leitungsrohr nach einem der Ansprüche 1 und 2, **dadurch gekennzeichnet, dass** die Metallfolie (5, 13) eine Aluminiumfolie, insbesondere mit einer Dicke von ca. 33 µm ist.

4. Verfahren zur Herstellung eines thermisch isolierten, flexiblen Leitungsrohrs (1) nach einem der Ansprüche 1 bis 3, mit den Verfahrensschritten,
- Zuführen eines aus Kunststoff bestehenden Innenrohrs (2),
- Umspritzen des Innenrohrs mittels einer Ringdüse (10) mit einer inneren Wärmedämmschicht (4),
- Beaufschlagen der inneren Wärmedämmschicht (4) nach dem Umspritzen mit Heißluft (11).
- Umwickeln des Innenrohrs (2) mit einer in Längsrichtung zugeführten Metallfolie (5,13),
- Auftragen einer äußeren Wärmedämmschicht (7) auf die Metallfolie (5, 13),
- Beaufschlagen der äußeren Wärmedämmschicht (7) nach dem Umspritzen mit Heißluft (20),
- Umschließen des aufgeschäumten Kunststoffgemischs mit einer Kunststofffolie (8, 23), **dadurch gekennzeichnet, dass** die Metallfolie (5, 13) vor dem Auftragen der äußeren Wärmedämmschicht (4) wendelförmig profiliert wird.

5. Verfahren zur Herstellung eines Leitungsrohrs (1) nach Anspruch 5, **dadurch gekennzeichnet, dass** die Metallfolie mittels eines das Leitungsrohr mindestens einmal umschlingenden Riemens (38) profiliert wird.

6. Verfahren zur Herstellung eines Leitungsrohrs (1) nach einem der Ansprüche 4 und 5, **dadurch gekennzeichnet, dass** das Leitungsrohr (1), nach dem Auftragen der äußeren Wärmedämmschicht (7) und dem beaufschlagen mit Heißluft (20), mit einer Kunststofffolie (8, 23), insbesondere einer Polyesterfolie mit einer Dicke von zirka 90 µm, umwickelt wird.

7. Vorrichtung zur Herstellung eines thermisch isolierten, flexiblen Leitungsrohrs (1) nach einem der Ansprüche 1 bis 3, bestehend aus
- Mitteln zum Zuführen eines aus Kunststoff bestehenden Innenrohrs (2),
- Mitteln mit denen das Innenrohr (2) unmittelbar nach dem Zuführen und vor dem Umwickeln mit einer Metallfolie (5, 13) mittels einer Ringdüse (10) mit einer inneren Wärmedämmschicht (4) umspritzt wird und
- Mitteln zum beaufschlagen der Wärmedämmschicht (4) mit Heißluft,
- Mittel zum wendelförmigen Umwickeln des Innenrohrs (2) mit einer in Längsrichtung zugeführten Metallfolie (5, 13),
- Mitteln zum Auftragen eines aufschäumbaren Kunststoffgemisches auf die Metallfolie (5, 13) und
- Mitteln zum Umschließen des aufgeschäumten Kunststoffgemisches mit einem Kunststoff (8, 23) und
- einer im Mittelpunkt mit einer Öffnung versehenen, angetriebenen, metallischen, insbesondere kreisförmigen Platte (34) auf der diametral und parallel zur Platte (34) je eine Riemenscheibe (35, 36) befestigt ist und einem Riemen (38) der über die Riemenscheibe (35, 36) geführt ist, wobei der Riemen (38) das durch die Öffnung geführte Leitungsrohr (1) mindestens einmal umschlingt.

8. Vorrichtung nach Anspruch 7, **dadurch gekennzeichnet, dass** auf und parallel zur Platte (34) eine weitere Riemenscheibe (37) angeordnet ist und dass der Riemen (38) über die weitere Riemenscheibe (37) zurückgeführt ist.

## Claims

1. Thermally insulated, flexible pipe (1) with a media-conducting inner pipe (2), a diffusion-impermeable metal foil (5, 13), which surrounds the inner pipe (2), is wound around the pipe (1) in the longitudinal direction and is joined, in particular adhesively bonded or welded, at the overlap (6), a heat-insulating layer (7), which surrounds the metal foil (5, 13), and a plastic film (8, 23), which encloses the heat-insulating layer (7), with a further, inner heat-insulating layer (4) being arranged between the inner pipe (2) and the metal foil (5, 13) and with the inner heat-insulating layer (4) and the outer heat-insulating layer (7) that surrounds the metal foil (5, 13) being a two-component foam, in particular a polyurethane-based two-component foam, **characterized in that** the metal foil (5, 13) is helically profiled and **in that** the inner pipe (2) consists of plastic.

2. Thermally insulated, flexible pipe according to Claim 1, **characterized in that** the plastic (8, 23) enclosing the outer heat-insulating layer (7) is a plastic film (8, 23), in particular a polyester film with a thickness of about 90 µm.

3. Thermally insulated, flexible pipe according to either of Claims 1 and 2, **characterized in that** the metal foil (5, 13) is an aluminium foil, in particular with a thickness of about 33 µm.

4. Procedure for manufacturing a thermally insulated, flexible pipe (1) according to one of Claims 1 to 3, with the method steps of
- supplying an inner pipe (2) consisting of plastic,
- extrusion-coating the inner pipe with an inner heat-insulating layer (4) by means of an annular die (10),
- exposing the inner heat-insulating layer (4) to hot air (11) after the extrusion-coating,
- winding around the inner pipe (2) a metal foil (5, 13) supplied in the longitudinal direction,
- applying an outer heat-insulating layer (7) to the metal foil (5, 13),
- exposing the outer heat-insulating layer (7) to hot air (20) after the extrusion-coating,
- enclosing the expanded polymer mixture with a plastic film (8, 23),
**characterized in that** the metal foil (5, 13) is helically profiled before the application of the outer heat-insulating layer (7).

5. Procedure for manufacturing a pipe (1) according to Claim 4, **characterized in that** the metal foil is profiled by means of a belt (38) wrapping around the pipe at least once.

6. Procedure for manufacturing a pipe (1) according to either of Claims 4 and 5, **characterized in that**, after the application of the outer heat-insulating layer (7) and the exposure to hot air (20), the pipe (1) is wound with a plastic film (8, 23), in particular a polyester film with a thickness of about 90 µm.

7. Device for manufacturing a thermally insulated, flexible pipe (1) according to one of Claims 1 to 3, comprising
- means for supplying an inner pipe (2) consisting of plastic,
- means with which the inner pipe (2) is extrusion-coated with an inner heat-insulating layer (4) by means of an annular die (10) immediately after being supplied and before being wound with a metal foil (5, 13), and
- means for exposing the heat-insulating layer (4) to hot air,
- means for helically winding around the inner pipe (2) a metal foil (5, 13) supplied in the longitudinal direction,
- means for applying an expandable polymer mixture to the metal foil (5, 13) and
- means for enclosing the expanded polymer mixture with a plastic (8, 23) and
- a driven, metallic, in particular circular, plate (34), which is provided in the centre with an opening and on which a belt pulley (35, 36) is respectively fastened diametrically and parallel to the plate (34), and comprising a belt (38), which is led over the belt pulley (35, 36), the belt (38) wrapping at least once around the pipe (1) led through the opening.

8. Device according to Claim 7, **characterized in that** a further belt pulley (37) is arranged on and parallel to the plate (34) and **in that** the belt (38) is led back over the further belt pulley (37).

## Revendications

1. Conduit tubulaire flexible thermiquement isolé (1) doté d'un tube intérieur (2) qui conduit un fluide, d'un film métallique (5, 13) imperméable à la diffusion, entourant le tube intérieur (2) et enroulé autour du conduit tubulaire (1) dans le sens de sa longueur, une couche (7) d'isolation thermique qui entoure le film métallique (5, 13) étant reliée à l'emplacement de superposition (6), en particulier par collage ou soudage, et un film (8, 23) en matière synthétique qui entoure la couche (7) d'isolation thermique, une autre couche, intérieure, (4) d'isolation thermique étant disposée entre le tube intérieur (2) et le film métallique (5, 13), la couche extérieure (7) d'isolation thermique qui entoure le film métallique (5, 13) et la couche intérieure (4) d'isolation thermique étant une mousse à deux composants et en particulier une mousse à deux composants à base de polyuréthane,
**caractérisé en ce que**
le film métallique (5, 13) est profilé en spirale et **en ce que** le tube intérieur (2) est constitué de matière synthétique.

2. Conduit tubulaire flexible thermiquement isolé selon la revendication 1, **caractérisé en ce que** la matière synthétique (8, 23) qui entoure la couche extérieure (7) d'isolation thermique est un film de matière synthétique (8, 23), en particulier un film de polyester d'une épaisseur d'environ 90 µm.

3. Conduit tubulaire flexible thermiquement isolé selon l'une des revendications 1 et 2, **caractérisé en ce que** le film métallique (5, 13) est un film d'aluminium dont l'épaisseur est en particulier d'environ 33 µm.

4. Procédé de fabrication d'un conduit tubulaire flexible thermiquement isolé (1) selon l'une des revendications 1 à 3, qui présente les étapes qui consistent à :
- amener un tube intérieur (2) constitué de matière synthétique,
- injecter une couche intérieure (4) d'isolation thermique autour du tube intérieur au moyen d'une filière annulaire (10),
- appliquer de l'air chaud (11) sur la couche intérieure (4) d'isolation thermique après son injection,
- enrouler autour du tube intérieur (2) un film métallique (5, 13) apporté dans le sens de la longueur,
- appliquer une couche extérieure (7) d'isolation thermique sur le film métallique (5, 13),
- appliquer de l'air chaud (20) sur la couche extérieure (7) d'isolation thermique après son injection,
- enrouler un film de matière synthétique (8, 23) autour du mélange de mousse de matière synthétique,
**caractérisé en ce que**
le film métallique (5, 13) est profilé en spirale avant l'application de la couche extérieure (7) d'isolation thermique.

5. Procédé de fabrication d'un conduit tubulaire (1) selon la revendication 4, **caractérisé en ce que** le film métallique est profilé au moyen d'une courroie (38) qui entoure au moins une fois le conduit tubulaire.

6. Procédé de fabrication d'un conduit tubulaire (1) selon l'une des revendications 4 et 5, **caractérisé en ce qu'**après l'application de la couche extérieure (7) d'isolation thermique et l'application d'air chaud (20), un film de matière synthétique (8, 23), en particulier un film de polyester d'une épaisseur d'environ 90 µm, est enroulé autour du conduit tubulaire (1).

7. Dispositif de fabrication d'un conduit tubulaire flexible thermiquement isolé (1) selon l'une des revendications 1 à 3, constitué :
- de moyens d'amenée d'un tube intérieur (2) constitué de matière synthétique,
- de moyens qui injectent une couche intérieure (4) d'isolation thermique autour du tube intérieur (2) au moyen d'une filière annulaire (10), immédiatement après l'amenée du tube intérieur et avant d'y enrouler un film métallique (5, 13),
- de moyens pour appliquer de l'air chaud sur la couche (4) d'isolation thermique,
- de moyens pour enrouler en spirale autour du tube intérieur (2) un film métallique (5, 13) apporté dans le sens de la longueur,
- de moyens pour appliquer un mélange moussable de matière synthétique sur le film métallique (5, 13) et
- de moyens pour appliquer une matière synthétique (8, 23) autour du mélange de mousse de matière synthétique et
- d'une plaque métallique (34) entraînée, en particulier de forme circulaire, dotée en son centre d'une ouverture, sur laquelle des poulies de courroie (35, 36) sont fixées en positions diamétralement opposées et parallèlement à la plaque (34), et une courroie (38) guidée sur les poulies de courroie (35, 36), la courroie (38) entourant au moins une fois le conduit tubulaire (1) passé dans l'ouverture.

8. Dispositif selon la revendication 7, **caractérisé en ce qu'**une autre poulie de courroie (37) est disposée parallèlement à la plaque (34) et **en ce que** la courroie (38) est ramenée par l'intermédiaire de l'autre poulie de courroie (37).
